(19) Europäisches Patentamt / European Patent Office / Office européen des brevets

(11) **EP 4 032 654 B1**

(12) **EUROPEAN PATENT SPECIFICATION**

(45) Date of publication and mention
of the grant of the patent:
**20.12.2023 Bulletin 2023/51**

(21) Application number: **20864609.1**

(22) Date of filing: **08.09.2020**

(51) International Patent Classification (IPC):
**B23K 26/38** (2014.01)   **B23K 31/12** (2006.01)
**B23K 26/12** (2014.01)   B23K 101/18 (2006.01)
B23K 103/04 (2006.01)

(52) Cooperative Patent Classification (CPC):
**B23K 26/032; B23K 26/38; B23K 31/125;**
B23K 2101/18; B23K 2103/04

(86) International application number:
**PCT/JP2020/033980**

(87) International publication number:
**WO 2021/054203 (25.03.2021 Gazette 2021/12)**

(54) **LASER PROCESSING DEVICE AND PROCESSING STATE DETERMINATION METHOD**

LASERBEARBEITUNGSMASCHINE UND VERFAHREN ZUM BESTIMMEN DES BEARBEITUNGSZUSTANDES

DISPOSITIF DE TRAITEMENT PAR LASER ET PROCÉDÉ DE DÉTERMINATION D'ÉTAT DE TRAITEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2019 JP 2019171114**

(43) Date of publication of application:
**27.07.2022 Bulletin 2022/30**

(73) Proprietor: **Amada Co., Ltd.**
**Isehara-shi, Kanagawa 259-1196 (JP)**

(72) Inventors:
• **ITOSHIRO, Fujinari**
**Isehara-shi, Kanagawa 259-1196 (JP)**
• **MIYOSHI, Hironobu**
**Isehara-shi, Kanagawa 259-1196 (JP)**
• **IWASAKI, Jun**
**Isehara-shi, Kanagawa 259-1196 (JP)**

(74) Representative: **Grünecker Patent- und
Rechtsanwälte
PartG mbB
Leopoldstraße 4
80802 München (DE)**

(56) References cited:
JP-A- H08 192 283    JP-A- H10 249 560
JP-A- 2016 155 140    US-A- 5 698 120
US-A1- 2019 084 092

## Description

Technical Field

The present invention relates to a laser processing machine and a processing state determination method.

Background Art

A laser processing machine that cuts a sheet metal with a laser beam emitted from a laser oscillator to produce a product having a predetermined shape is widely used. Patent Literature 1 describes a processing state determination device that determines whether or not a processing defect has occurred when a laser processing machine is cutting a sheet metal.

Patent Literature 2, which forms the basis of the preamble of claims 1 and 7, discloses a device and method for determination of processing defects during laser cutting. The determination is based on the detection of light reflected from a processing zone. The signal generated by the reflected light is processed by filtering and compared against a threshold value, thus determining if a processing defect has occurred.

Citation List

Patent Literature

Patent Literature 1: Japanese Patent Application Laid-Open Publication No. 2016-155140
Patent Literature 2: US 5 698 120 A

Summary

The conventional processing state determination device described in Patent Literature 1 determines whether or not a processing defect has occurred by comparing, with a threshold value, a detection level of a reflected beam reflected from a sheet metal when the sheet metal is irradiated with a laser beam so that the sheet metal is cut. The processing defect that can be detected by the conventional processing state determination device is a processing defect referred to as a gouging defect in which the sheet metal is not cut because the laser beam does not penetrate the sheet metal.

The conventional processing state determination device is not able to determine whether or not a processing defect referred to as a burning defect, which may occur when a thick plate of SS material, for example, is cut by using oxygen as an assist gas, has occurred. The burning defect is a processing defect in a state in which the quality of a cut surface of the sheet metal is deteriorated because the cut surface is excessively melted.

An object of the invention is to provide a laser processing machine and a processing state determination method capable of determining whether or not a burning defect has occurred.

According to a first aspect of the invention, a laser processing machine is provided that includes a laser oscillator configured to generate and emit a laser beam, a processing head configured to irradiate a sheet metal with the laser beam emitted from the laser oscillator to cut the sheet metal, an assist gas supply device configured to supply an assist gas to the processing head so as to blow the assist gas onto the sheet metal, a NC device configured to control the laser oscillator, a reflected beam detector configured to detect a reflected beam reflected from the sheet metal when the sheet 5 metal is irradiated with the laser beam to cut the sheet metal, a standard deviation value calculation unit configured to calculate, in a predetermined calculation cycle, a standard deviation value of a reflected beam detection value at a monitoring wavelength from among reflected beam detection values in a predetermined wavelength band output from the reflected beam detector, and a quality determination unit configured to determine whether or not a burning defect has occurred in which a cut surface of the sheet metal is excessively melted based on a comparison result of comparing, with a first threshold value, the standard deviation value calculated by the standard deviation value calculation unit.

According to a second aspect of the invention, a processing state determination method is provided that includes irradiating, by a processing head, a sheet metal with a laser beam emitted from a laser oscillator to cut the sheet metal, supplying, by an assist gas supply device, oxygen to the processing head as an assist gas so as to blow the assist gas onto the sheet metal, detecting, by a reflected beam detector, a reflected beam reflected from the sheet metal when the sheet metal is irradiated with the laser beam to cut the sheet metal, calculating, in a predetermined calculation cycle, a standard deviation value of a reflected beam detection value at a monitoring wavelength from among reflected beam detection values in a predetermined wavelength band output from the reflected beam detector, and determining whether or not a burning defect has occurred in which a cut surface of the sheet metal is excessively melted based on a comparison result of comparing the calculated standard deviation value with a first threshold value.

According to the laser processing machine and the processing state determination method of the the invention, it is possible to determine whether or not a burning defect has occurred.

Brief Description of Drawings

[Figure 1] Figure 1 is a diagram showing an overall configuration example of a laser processing machine according to the invention.

[Figure 2] Figure 2 is a block diagram showing a specific configuration example of a processing state determination unit in the laser processing machine of the invention

[Figure 3] Figure 3 is a diagram conceptually showing determination conditions associated with material conditions stored in a determination condition storage unit included in the processing state determination unit shown in Figure 2.

[Figure 4A] Figure 4A is a characteristic diagram showing a reflected beam detection value whose material condition is SS400 and a thickness of 16 mm and in a state in which a processing defect has not occurred.

[Figure 4B] Figure 4B is a characteristic diagram showing a reflected beam detection value whose material condition is SS400 and a thickness of 16 mm and in a state in which a burning defect has occurred.

[Figure 5A] Figure 5A is a diagram showing a reflected beam detection value at a monitoring wavelength extracted from among reflected beam detection values in a state in which the processing defect shown in Figure 4A has not occurred, and a standard deviation value calculated based on the reflected beam detection value.

[Figure 5B] Figure 5B is a diagram showing a reflected beam detection value at a monitoring wavelength extracted from among reflected beam detection values in a state in which the burning defect shown in Figure 4B has occurred, and a standard deviation value calculated based on the reflected beam detection value.

[Figure 6A] Figure 6A is a diagram showing a reflected beam detection value at a monitoring wavelength extracted from among reflected beam detection values whose material condition is SS400 and a thickness of 22 mm and in a state in which a processing defect has not occurred, and a standard deviation value calculated based on the reflected beam detection value.

[Figure 6B] Figure 6B is a diagram showing a reflected beam detection value at a monitoring wavelength extracted from among reflected beam detection values whose material condition is SS400 and a thickness of 22 mm and in a state in which a burning defect has occurred, and a standard deviation value calculated based on the reflected beam detection value.

Description of the invention

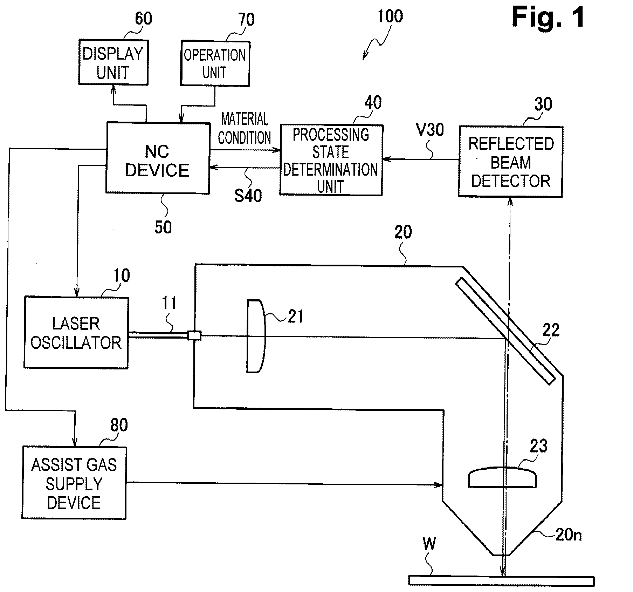

Hereinafter, a laser processing machine and a processing state determination method of the invention a will be described with reference to the attached drawings. In Figure 1, a laser processing machine 100 is provided with a laser oscillator 10 that generates and emits a laser beam, a processing head 20, and a process fiber 11 that transmits, to the processing head 20, the laser beam emitted from the laser oscillator 10.

Typically, the laser oscillator 10 is a fiber laser oscillator or a direct diode laser oscillator (a DDL oscillator). The laser oscillator 10 emits a laser beam in the 1 $\mu$m band having a wavelength of 900 nm to 1100 nm. Specifically, the fiber laser oscillator emits a laser beam having a wavelength of 1060 nm to 1080 nm, and the DDL oscillator emits a laser beam having a wavelength of 910 nm to 950 nm.

The processing head 20 is provided with a collimating lens 21, a bend mirror 22, and a focusing lens 23. A nozzle 20n is attached to the tip end portion of the processing head 20. The nozzle 20n includes an opening having a circular shape at the tip end portion thereof for emitting the laser beam.

The collimating lens 21 converts the laser beam of a divergent beam emitted from the process fiber 11 into a parallel beam (a collimated beam). The bend mirror 22 reflects the laser beam emitted from the collimating lens 21 and bends the moving direction thereof by 90 degrees. The focusing lens 23 focuses the incident laser beam and irradiates a sheet metal W therewith. The solid arrow moving from the emission end of the process fiber 11 to the sheet metal W indicates the optical axis of the laser beam.

The sheet metal W is, for example, a thick plate of SS material or copper having a thickness of 12 mm to 32 mm. One example of the SS material is a rolled steel for general structural applications (SS400).

Further, the laser processing machine 100 is provided with a reflected beam detector 30, a processing state determination unit 40, a NC. device 50, a display unit 60, an operation unit 70, and an assist gas supply device 80. A reflected beam when the sheet metal W is irradiated with the laser beam so that the sheet metal W is cut, which is indicated by the one-dot chain line, is transmitted through the bend mirror 22 and made incident on the reflected beam detector 30. The reflected beam transmitted through the bend mirror 22 may be transmitted by an optical fiber and made incident on the reflected beam detector 30. The bend mirror 22 has a property of reflecting a laser beam with which the sheet metal W is irradiated and transmitting a beam having a specific wavelength described below. The operation of the reflected beam detector 30 and the processing state determination unit 40 will be described in detail later.

The NC device 50 is an example of a control device that controls each part of the laser processing machine 100. The NC device 50 controls the laser oscillator 10 and the assist gas supply device 80. The NC device 50 controls an unillustrated moving mechanism that moves the processing head 20. The NC device 50 causes the display unit 60 to display various types of information. An operator can operate the operation unit 70 to select a material condition for the sheet metal W and a processing condition when processing the sheet metal W. The NC device 50 controls the laser processing machine 100 so as to process the sheet metal W under the selected processing condition.

When the laser processing machine 100 irradiates the sheet metal W with the laser beam to cut the sheet metal W, the assist gas supply device 80 supplies oxygen to the processing head 20 as an assist gas. The assist gas is blown onto the sheet metal W from the opening at the tip end of the nozzle 20n. The assist gas discharges molten metal within a kerf width in which the sheet metal W is melted. When the assist gas is oxygen, the oxidation reaction heat promotes the cutting of the sheet metal W.

Here, the operation of the reflected beam detector 30 and the processing state determination unit 40 will be described. Although not illustrated in Figure 1, the laser processing machine 100 is provided with a function of irradiating the sheet metal W with a red guide beam so that the position of the laser beam with which the sheet metal W is irradiated can be visually recognized before the sheet metal W is processed. Then, the bend mirror 22 transmits a beam having a wavelength of 900 nm or less excluding the vicinity of the wavelength of the red guide beam. Specifically, when the wavelength of the guide beam is 630 nm, the bend mirror 22 transmits a beam in a wavelength band of 320 nm to 900 nm excluding a wavelength band of 600 nm to 660 nm.

The reflected beam in the above wavelength band that is transmitted through the bend mirror 22 is made incident on the reflected beam detector 30. The reflected beam detector 30 generates an analog detection value corresponding to the beam amount of the incident reflected beam, generates a reflected beam detection value V30 that is a digital value obtained by A/D converting the analog detection value, and supplies the reflected beam detection value V30 to the processing state determination unit 40. The reflected beam detection value V30 indicates a detection level corresponding to the beam amount of a reflected beam at each wavelength in the wavelength band. When the reflected beam detector 30 outputs an analog detection value, an A/D converter may be provided at a later stage of the reflected beam detector 30. The reflected beam detector 30 can be configured with a spectroscope.

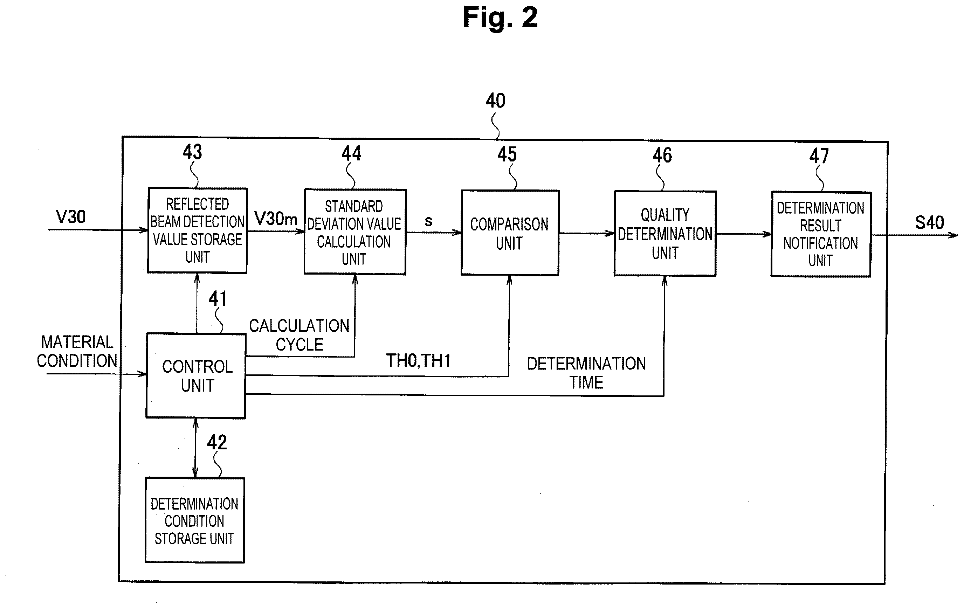

As shown in Figure 2, the processing state determination unit 40 includes a control unit 41, a determination condition storage unit 42, a reflected beam detection value storage unit 43, a standard deviation value calculation unit 44, a comparison unit 45, a quality determination unit 46, and a determination result notification unit 47. The processing state determination unit 40 can be configured with a microprocessor or a microcomputer. The processing state determination unit 40 can be configured by mixing software and hardware. The processing state determination unit 40 may be configured with a substrate using an integrated circuit.

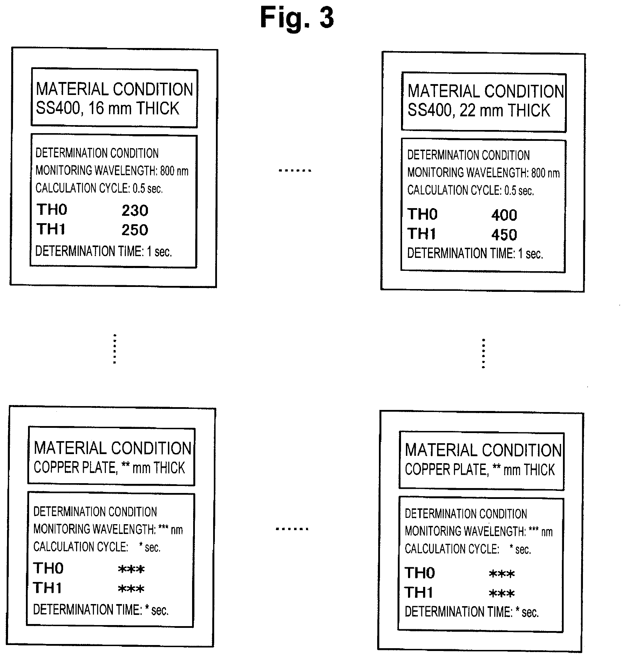

The material condition is supplied from the NC device 50 to the control unit 41. The material condition is information including at least a material type and a thickness of the sheet metal W. As shown in Figure 3, the determination condition storage unit 42 stores determination conditions associated with various material conditions. As an example, when the material condition is SS400 and a thickness of 16 mm, a monitoring wavelength of 800 nm, a calculation cycle of 0.5 seconds, threshold values TH0 and TH1 of 230 and 250, respectively, and a determination time of one second are set as the determination condition.

As another example, when the material condition is SS400 and a thickness of 22 mm, a monitoring wavelength of 800 nm, a calculation cycle of 0.5 seconds, threshold values TH0 and TH1 of 400 and 450, respectively, and a determination time of one second are set as the determination condition. The control unit 41 reads out, from the determination condition storage unit 42, the determination condition corresponding to the input material condition.

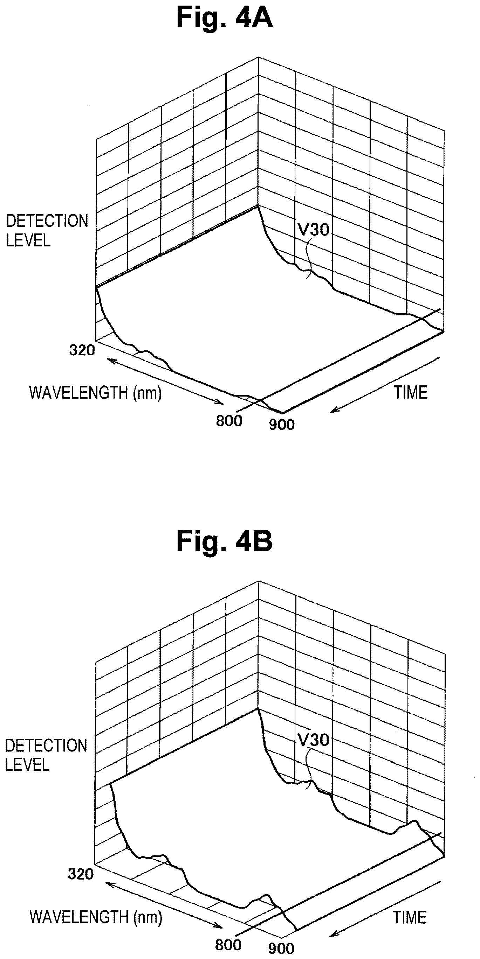

The reflected beam detection value storage unit 43 stores the reflected beam detection value V30 having the characteristics as shown in Figure 4A or Figure 4B. Figure 4A shows, as an example, the reflected beam detection value V30 whose material condition is SS400 and a thickness of 16 mm and in a state in which a processing defect has not occurred. Figure 4B shows, as an example, the reflected beam detection value V30 whose material condition is SS400 and a thickness of 16 mm and in a state in which a burning defect has occurred.

The reflected beam detection value storage unit 43 stores the reflected beam detection value V30 for a predetermined time while updating the reflected beam detection value V30. The reflected beam detection value storage unit 43 stores a detection level in the wavelength band of 320 nm to 900 nm excluding the wavelength band of 600 nm to 660 nm for a predetermined time.

A case in which SS400 and a thickness of 16 mm are input to the control unit 41 as the material condition is taken as an example. Since the monitoring wavelength is 800 nm when the material condition is SS400 and a thickness of 16 mm, the control unit 41 controls the reflected beam detection value storage unit 43 so as to read out a detection level at a wavelength of 800 nm from among the reflected beam detection values V30 stored in the reflected beam detection value storage unit 43. As a result, a reflected beam detection value V30m, which is a detection level at a wavelength of 800 nm, is read out from the reflected beam detection value storage unit 43 and supplied to the standard deviation value calculation unit 44.

The control unit 41 supplies data indicating the calculation cycle to the standard deviation value calculation unit 44, supplies the threshold values TH0 and TH1 to the comparison unit 45, and supplies data indicating the determination time to the quality determination unit 46.

The standard deviation value calculation unit 44 calculates a standard deviation value s of the reflected beam detection value V30m at the monitoring wavelength based on Expression (1). In Expression (1), xi is the detection level at each point in time in the calculation cycle of 0.5 seconds, x bar is an average value of the detection levels in the calculation cycle of 0.5 seconds, and n is the number of the detection values in the calculation cycle of 0.5 seconds.

[Expression 1]

$$ s = \sqrt{\frac{1}{n} \sum_{i=1}^{n} (xi - \overline{x})^2} \quad \cdots \quad (1) $$

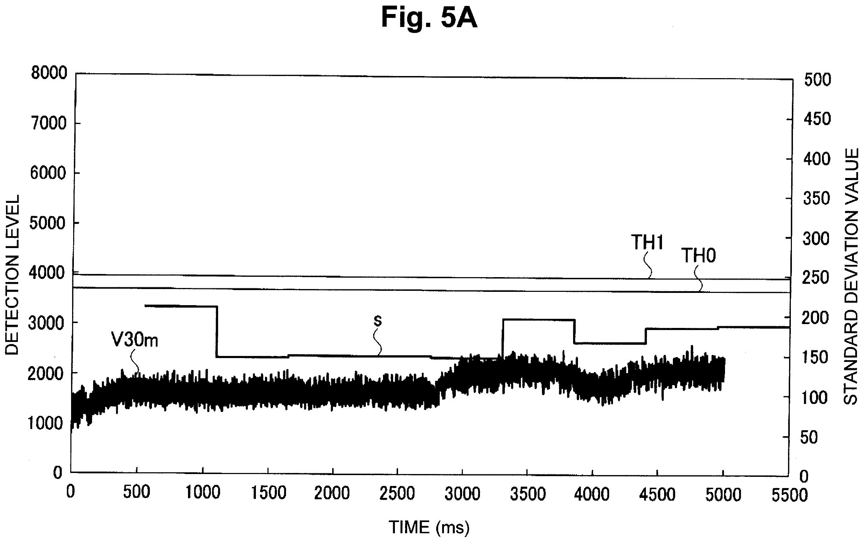

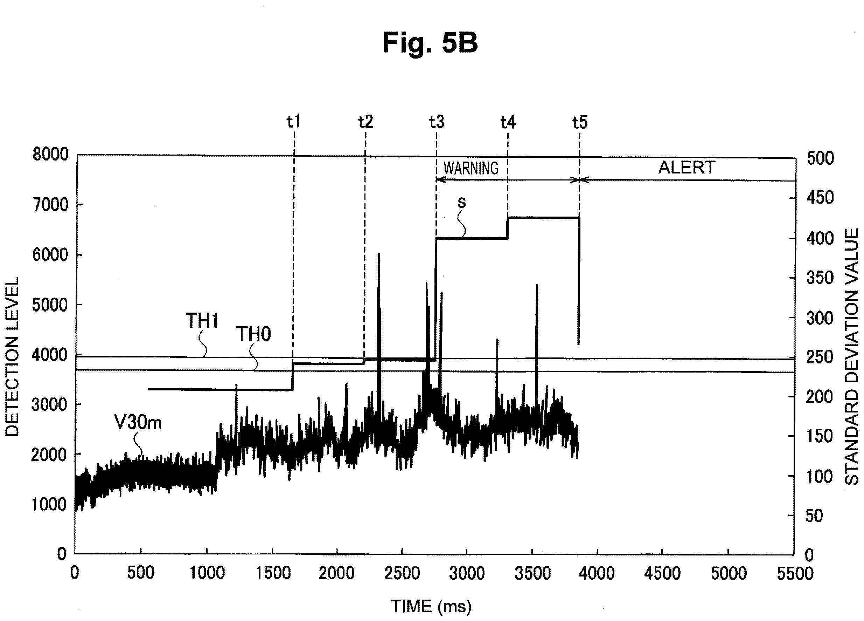

Figure 5A shows the reflected beam detection value V30m at a wavelength of 800 nm extracted from among the reflected beam detection values V30 in a state in which the processing defect shown in Figure 4A has not occurred, and a standard deviation value s calculated based on the reflected beam detection value V30m. Figure 5B shows the reflected beam detection value V30m at a wavelength of 800 nm extracted from among the reflected beam detection values V30 in a state in which the burning defect shown in Figure 4B has occurred, and a standard deviation value s calculated based on the reflected beam detection value V30m.

It should be noted that the numerical values of the detection levels and the standard deviation values in Figures 5A and 5B are merely examples. The numerical values of the detection levels and the standard deviation values are determined depending on how the reflected beam amount is detected in the reflected beam detector 30. Therefore, the respective numerical values 230 and 250 of the threshold values TH0 and TH1 are merely examples, and the threshold values TH0 and TH1 are set according to the reflected beam detection value V30 detected by the reflected beam detector 30.

The comparison unit 45 compares the standard deviation value s with the threshold values TH0 and TH1. The threshold value TH0 is a threshold value (a second threshold value) for determining whether or not there is a risk of occurrence of a burning defect. The threshold value TH1 is a threshold value (a first threshold value) for determining whether or not a burning defect has occurred. The comparison unit 45 outputs a first value if the standard deviation value s is less than the threshold value TH0, outputs a second value if the standard deviation value s is equal to or greater than the threshold value TH0 and less than the threshold value TH1, and outputs a third value if the standard deviation value s is equal to or greater than the threshold value TH1. The first to third values as the comparison results output by the comparison unit 45 may be, for example, "00", "01", and "10", respectively.

If the first value is input from the comparison unit 45, the quality determination unit 46 outputs the first determination value indicating a normal processing state in which a burning defect has not occurred. Since the determination time of the quality determination unit 46 is one second, if the second value is input from the comparison unit 45 continuously for one second or longer, the quality determination unit 46 outputs a second determination value indicating that there is a risk of occurrence of a burning defect. If the third value is input from the comparison unit 45 continuously for one second or longer, the quality determination unit 46 outputs a third determination value indicating that a burning defect has occurred. The first to third determination values output by the quality determination unit 46 may be, for example, "00", "01", and "10", respectively. In the invention, the determination time is set to one second, but the determination time may be set to 0.5 seconds in accordance with the calculation cycle of 0.5 seconds.

If the second determination value is input from the quality determination unit 46, the determination result notification unit 47 supplies, to the NC device 50, a first notification signal as a notification signal S40 for notifying that there is a risk of occurrence of a burning defect. If the third determination value is input from the quality determination unit 46, the determination result notification unit 47 supplies, to the NC device 50, a second notification signal as the notification signal S40 for notifying that a burning defect has occurred. If the first determination value is input from the quality determination unit 46, the determination result notification unit 47 does not need to supply the notification signal S40 to the NC device 50, but the determination result notification unit 47 may supply a third notification signal to the NC device 50 for notifying that it is a normal processing state.

Returning to Figure 1, when the notification signal S40, which is the first notification signal, is supplied from the processing state determination unit 40, the NC device 50 displays a warning message (or a warning image) on the display unit 60 for notifying the operator of a risk of occurrence of a burning defect. When the notification signal S40, which is the second notification signal, is supplied from the processing state determination unit 40, the NC device 50 displays an alert message (or an alert image) on the display unit 60 for notifying the operator that a burning defect has occurred.

When the notification signal S40, which is the second notification signal, is supplied from the processing state determination unit 40, the NC device 50 preferably controls the laser processing machine 100 so as to stop the processing of the sheet metal W.

In Figure 5A, since the state is continuing in which the standard deviation value s is less than the threshold value TH0, the notification signal S40, which is the first or second notification signal, is not supplied to the NC device 50. Therefore, the warning message or the alert message is not to be displayed on the display unit 60.

In Figure 5B, since the standard deviation value s is less than the threshold value TH1 and equal to or greater than TH0 for one second from times t1 to t3, the first notification signal is supplied to the NC device 50 at the time t3, and the warning message is started to be displayed on the display unit 60. Since the standard deviation value s is equal to or greater than the threshold value TH1 for one second from times t3 to t5, the first notification signal is stopped to be supplied at the time t5, and the display of the warning message is canceled. Then, the second notification signal is supplied to the NC device 50 and the alert message is displayed on the display unit 60. The laser processing is controlled to be stopped together with the display of the alert message that a burning defect has occurred.

Of one second from the times t2 to t4, the standard deviation value s is less than the threshold TH1 and equal to or greater than TH0 for 0.5 seconds from the times t2 to t3, and the standard deviation value s is equal to or greater than the TH1 for 0.5 seconds from the times t3 to t4. This means the standard deviation value s is not equal to or greater than TH1 continuously for one second or longer. Therefore, the warning message is set to remain at the time t4. t4. However, the warning message by the first notification signal may be switched to the alert message by the second notification signal by determining whether or not the standard deviation value s for 0.5 seconds is equal to or greater than the threshold value TH1. The alert message may be displayed on the display unit 60 by supplying the second notification message to the NC device 50 when the standard deviation value s for 0.5 seconds from the times t3 to t4 is equal to or greater than the threshold value TH1, which stops the first notification signal to be supplied at the time t4 and cancels the display of the warning message. In this case, the laser processing is controlled to be stopped together with the display of the alert message that a burning defect has occurred at the time t4.

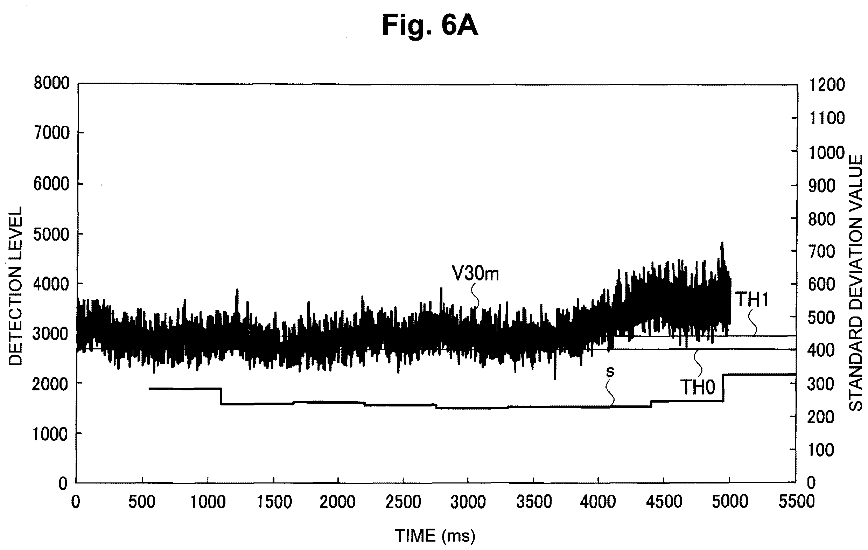

Figure 6A shows the reflected beam detection value V30m at a wavelength of 800 nm extracted from among the reflected beam detection values V30 whose material condition is SS400 and a thickness of 22 mm and in a state in which a processing defect has not occurred, and a standard deviation value s calculated based on the reflected beam detection value V30m. Although not illustrated, the reflected beam detection value, whose material condition is SS400 and a thickness of 22 mm and in a state in which a processing defect has not occurred, has the same characteristics as those in Figure 4A.

In Figure 6A, since the state is continuing in which the standard deviation value s is less than the threshold value TH0, the notification signal S40, which is the first or second notification signal, is not supplied to the NC device 50. Therefore, the warning message or the alert message is not to be displayed on the display unit 60.

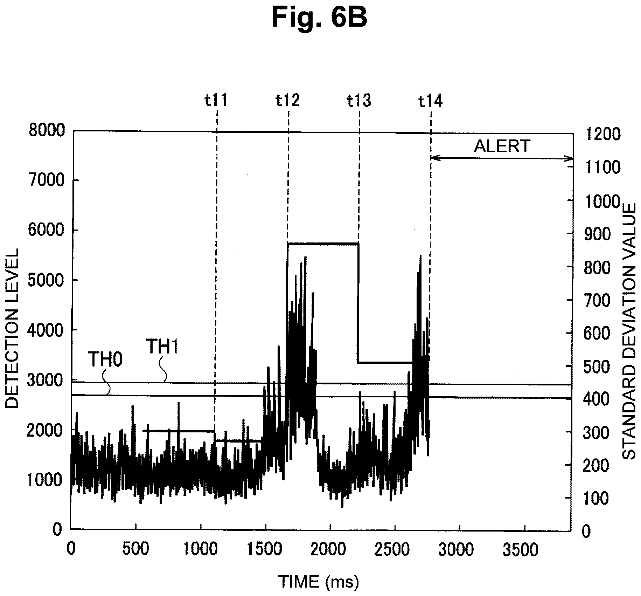

Figure 6B shows the reflected beam detection value V30m at a wavelength of 800 nm extracted from among the reflected beam detection values V30 whose material condition is SS400 and a thickness of 22 mm and in a state in which a burning defect has occurred, and the standard deviation value s calculated based on the reflected beam detection value V30m. Though not illustrated, the reflected beam detection value, whose material condition is SS400 and a thickness of 22 mm and in a state in which a burning defect has occurred, has the same characteristics as those in Figure 4B.

In Figure 6B, since the standard deviation value s is not equal to or greater than the threshold value TH1 for one second from times t11 to t13, the first and second notification signals are not supplied to the NC device 50 at the time t13, and the warning message or the alert message is not displayed on the display unit 60. Since the standard deviation value s is equal to or greater than the threshold value TH1 for one second from times t12 to t14, the second notification signal is supplied to the NC device 50 at the time t14, and the alert message on the display unit 60 is started to be displayed. In this case, the laser processing is controlled to be stopped together with the display of the alert message that a burning defect has occurred at the time t14.

Since the standard deviation value s is equal to or greater than the threshold value TH1 for 0.5 seconds from the times t12 to t13 of one second from the times t11 to t13, the alert message may be displayed on the display unit 60 by determining whether or not the standard deviation s for 0.5 seconds is equal to or greater than the threshold value TH1 and supplying the second notification signal to the NC device 50 at the time t13. In this case, the laser processing is controlled to be stopped together with the display of the alert message that a burning defect has occurred at the time t13.

In the processing state determination unit 40 shown in Figure 2, the comparison unit 45 compares the standard deviation value s with the threshold values TH0 and TH1, and the quality determination unit 46 determines whether or not there is a risk of occurrence of a burning defect and whether or not a burning defect has occurred. The determination condition may be only the threshold value TH1, which is the first threshold value, so that the comparison unit 45 compares the standard deviation value s with the threshold value TH1 and the quality determination unit 46 determines only whether or not a burning defect has occurred. In this case, the NC device 50 displays, on the display unit 60, only the alert message for notifying that a burning defect has occurred.

It is preferable that the NC device 50 displays, on the display unit 60, both of the warning message for notifying that there is a risk of occurrence of a burning defect and the alert message for notifying that a burning defect has occurred.

The quality determination unit 46 may output the second determination value immediately when the second value is input, and may output the third determination value immediately when the third value is input.

In order to avoid erroneous determination, it is preferable that the quality determination unit 46 outputs the second determination value when the second value is input continuously for the determination time, and outputs the third determination value when the third value is input continuously for the determination time.

As described above, according to the laser processing machine and the processing state determination method of the invention, it is possible to determine whether or not a burning defect has occurred when a thick plate of SS material or the like is cut by using oxygen as an assist gas.

The SS material and the copper plate may use different monitoring wavelengths in their determination conditions. The monitoring wavelength is preferably set to an appropriate wavelength corresponding to the material of the sheet metal W.

**Claims**

1. A laser processing machine (100), comprising:

   a laser oscillator (10) configured to generate and emit a laser beam;
   a processing head (20) configured to irradiate a sheet metal (W) with the laser beam emitted from the laser oscillator (10) to cut the sheet metal (W);
   an assist gas supply device (80) configured to supply an assist gas to the processing head (20) so as to blow the assist gas onto the sheet metal (W);
   a NC device (50) configured to control the laser oscillator (10); and
   a reflected beam detector (30) configured to detect a reflected beam reflected from the sheet metal (W) when the sheet metal (W) is irradiated with the laser beam to cut the sheet metal (W);
   **characterized in that** the laser processing machine (100) further comprises:

   a standard deviation value calculation unit (44) configured to calculate, in a predetermined calculation cycle, a standard deviation value of a reflected beam detection value at a monitoring wavelength from among reflected beam detection values in a predetermined wavelength band output from the reflected beam detector (30); and
   a quality determination unit (46) configured to determine whether or not a burning defect has occurred in which a cut surface of the sheet metal (W) is excessively melted based on a comparison result of comparing, with a first threshold value, the standard deviation value calculated by the standard deviation value calculation unit (44).

2. The laser processing machine (100) according to claim 1, wherein the quality determination unit (46) is configured to determine that the burning defect has occurred in a case where a state continues for a predetermined determination time or longer in which the standard deviation value is equal to or greater than the first threshold value.

3. The laser processing machine (100) according to claim 1, wherein the quality determination unit (46) is configured to determine whether or not there is a risk of occurrence of the burning defect based on a comparison result of comparing the standard deviation value with a second threshold value smaller than the first threshold value.

4. The laser processing machine (100) according to claim 3, wherein the quality determination unit (46) is configured to determine that there is a risk of occurrence of the burning defect in a case where a state continues for a predetermined determination time or longer in which the standard deviation value is less than the first threshold value and equal to or greater than the second threshold value, and is configured to determine that the burning defect has occurred in a case where a state continues for the predetermined determination time or longer in which the standard deviation value is equal to or greater than the first threshold value.

5. The laser processing machine (100) according to claim 1 or 2, wherein a determination condition including the monitoring wavelength, the calculation cycle, and the first threshold value is set for each material condition including a material type and a thickness of a sheet metal (W),

   the standard deviation value calculation unit (44) is configured to calculate, in the calculation cycle set in the determination condition, a standard deviation value of a reflected beam detection value at the monitoring wavelength set in the determination condition corresponding to the material condition of the sheet metal (W) that is being cut, and
   the quality determination unit (46) is configured to determine whether or not the burning defect has occurred based on a comparison result of comparing the standard deviation value with the first threshold value set in the determination condition.

6. The laser processing machine (100) according to claim 3 or 4, wherein a determination condition including the monitoring wavelength, the calculation cycle, the first threshold value, and the second threshold value is set for each material condition including a material type and a thickness of a sheet metal (W),

the standard deviation value calculation unit (44) is configured to calculate, in the calculation cycle set in the determination condition, a standard deviation value of a reflected beam detection value at the monitoring wavelength set in the determination condition corresponding to the material condition of the sheet metal (W) that is being cut, and
the quality determination unit (46) is configured to determine whether or not the burning defect has occurred based on a comparison result of comparing the standard deviation value with the first threshold value set in the determination condition, and is configured to determine whether or not there is a risk of occurrence of the burning defect based on a comparison result of comparing the standard deviation value with the second threshold value set in the determination condition.

7. A processing state determination method, comprising:

irradiating, by a processing head (20), a sheet metal (W) with a laser beam emitted from a laser oscillator (10) to cut the sheet metal (W);
supplying, by an assist gas supply device (80), oxygen to the processing head (20) as an assist gas so as to blow the assist gas onto the sheet metal (W); and
detecting, by a reflected beam detector (30), a reflected beam reflected from the sheet metal (W) when the sheet metal (W) is irradiated with the laser beam to cut the sheet metal (W);
**characterized in that** the processing state determination method further comprises:

calculating, in a predetermined calculation cycle, a standard deviation value of a reflected beam detection value at a monitoring wavelength from among reflected beam detection values in a predetermined wavelength band output from the reflected beam detector (30); and
determining whether or not a burning defect has occurred in which a cut surface of the sheet metal (W) is excessively melted based on a comparison result of comparing the calculated standard deviation value with a first threshold value.

8. The processing state determination method according to claim 7, further comprising determining that the burning defect has occurred in a case where a state continues for a predetermined determination time or longer in which the standard deviation value is equal to or greater than the first threshold value.

9. The processing state determination method according to claim 7, further comprising determining whether or not there is a risk of occurrence of the burning defect based on a comparison result of comparing the standard deviation value with a second threshold value smaller than the first threshold value.

10. The processing state determination method according to claim 9, further comprising:

determining that there is a risk of occurrence of the burning defect in a case where a state continues for a predetermined determination time or longer in which the standard deviation value is less than the first threshold value and equal to or greater than the second threshold value; and
determining that the burning defect has occurred in a case where a state continues for the predetermined determination time or longer in which the standard deviation value is equal to or greater than the first threshold value.

11. The processing state determination method according to claim 7 or 8, further comprising:

storing, in a determination condition storage unit, a determination condition including the monitoring wavelength, the calculation cycle, and the first threshold value set for each material condition including a material type and a thickness of a sheet metal (W);
reading, from the determination condition storage unit, the determination condition corresponding to the material condition of the sheet metal (W) to be cut;
calculating, in the calculation cycle set in the read determination condition, a standard deviation value of a reflected beam detection value at the monitoring wavelength set in the read determination condition; and
determining whether or not the burning defect has occurred based on a comparison result of comparing the standard deviation value with the first threshold value set in the read determination condition.

12. The processing state determination method according to claim 9 or 10, further comprising:

storing, in a determination condition storage unit, a determination condition including the monitoring wavelength, the calculation cycle, the first threshold value, and the second threshold value set for each material condition including a material type and a thickness of a sheet metal (W);

reading, from the determination condition storage unit, the determination condition corresponding to the material condition of the sheet metal (W) to be cut;

calculating, in the calculation cycle set in the read determination condition, a standard deviation value of a reflected beam detection value at the monitoring wavelength set in the read determination condition; and

determining whether or not the burning defect has occurred based on a comparison result of comparing the standard deviation value with the first threshold value set in the read determination condition, and determining whether or not there is a risk of occurrence of the burning defect based on a comparison result of comparing the standard deviation value with the second threshold value set in the read determination condition.

**Patentansprüche**

1. Laser-Bearbeitungsmaschine (100), die umfasst:

   einen Laseroszillator (10), der so ausgeführt ist, dass er einen Laserstrahl erzeugt und emittiert;
   einen Bearbeitungskopf (20), der so ausgeführt ist, dass er ein Blech (W) mit dem von dem Laseroszillator (10) emittierten Laserstrahl bestrahlt, um das Blech (W) zu schneiden;
   eine Hilfsgas-Zuführvorrichtung (80), die so ausgeführt ist, dass sie dem Bearbeitungskopf (20) ein Hilfsgas zuführt, um das Hilfsgas auf das Blech (W) zu blasen; eine NC-Vorrichtung (50), die so ausgeführt ist, dass sie den Laseroszillator (10) steuert; sowie
   einen Detektor (30) für einen reflektierten Strahl, der so ausgeführt ist, dass er einen reflektierten Strahl erfasst, der von dem Blech (W) reflektiert wird, wenn das Blech (W) mit dem Laserstrahl bestrahlt wird, um das Blech (W) zu schneiden; **dadurch gekennzeichnet, dass** die Laser-Bearbeitungsmaschine (100) des Weiteren umfasst:

   eine Einheit (44) für Berechnung eines Standardabweichungs-Wertes, die so ausgeführt ist, dass sie in einem vorgegebenen Berechnungszyklus einen Standardabweichungs-Wert eines Wertes für Erfassung eines reflektierten Strahls bei einer Überwachungs-Wellenlänge aus Werten für Erfassung eines reflektierten Strahls in einem vorgegebenen Wellenlängenband berechnet, die von dem Detektor für einen reflektierten Strahl (30) ausgegeben werden; und eine Einheit (46) für Qualitätsermittlung, die so ausgeführt ist, dass sie auf Basis eines Vergleichsergebnisses beim Vergleichen des von der Einheit (44) für Berechnung eines Standardabweichungs-Wertes berechneten Standardabweichungs-Wertes mit einem ersten Schwellenwert ermittelt, ob ein Brennfehler aufgetreten ist, bei dem eine Schnittfläche des Blechs (W) zu stark zum Schmelzen gebracht wird.

2. Laser-Bearbeitungsmaschine (100) nach Anspruch 1, wobei die Einheit (46) für Qualitätsermittlung so ausgeführt ist, dass sie dann ermittelt, dass der Brennfehler aufgetreten ist, wenn ein Zustand, in dem der Standardabweichungs-Wert genauso groß ist wie oder größer als der erste Schwellenwert, über eine vorgegebene Ermittlungszeit oder länger andauert.

3. Laser-Bearbeitungsmaschine (100) nach Anspruch 1, wobei die Einheit (46) für Qualitätsermittlung so ausgeführt ist, dass sie auf Basis eines Vergleichsergebnisses beim Vergleichen des Standardabweichungs-Wertes mit einem zweiten Schwellenwert, der kleiner ist als der erste Schwellenwert, ermittelt, ob eine Gefahr von Auftreten des Brennfehlers vorliegt.

4. Laser-Bearbeitungsmaschine (100) nach Anspruch 3, wobei die Einheit (46) für Qualitätsermittlung so ausgeführt ist, dass sie dann ermittelt dass eine Gefahr von Auftreten des Brennfehlers vorliegt, wenn ein Zustand, in dem der Standardabweichungs-Wert kleiner ist als der erste Schwellenwert und genauso groß ist wie oder größer als der zweite Schwellenwert, über eine vorgegebene Ermittlungszeit oder länger andauert, und so ausgeführt ist, dass sie dann ermittelt, dass der Brennfehler aufgetreten ist, wenn ein Zustand, in dem der Standardabweichungs-Wert genauso groß ist wie oder größer als der erste Schwellenwert, über die vorgegebene Ermittlungszeit oder länger andauert.

5. Laser-Bearbeitungsmaschine (100) nach Anspruch 1 oder 2, wobei eine Ermittlungsbedingung, die die Überwachungs-Wellenlänge, den Berechnungszyklus sowie den ersten Schwellenwert einschließt, für jede Materialbedingung einschließlich eines Materialtyps und einer Dicke eines Blechs (W) festgelegt wird,

   die Einheit (44) für Berechnung eines Standardabweichungs-Wertes so ausgeführt ist, dass sie in dem in der Ermittlungsbedingung festgelegten Berechnungszyklus einen Standardabweichungs-Wert eines Wertes für Erfassung eines reflektierten Strahls bei der in der Ermittlungsbedingung festgelegten Überwachungs-Wellenlänge entsprechend der Materialbedingung des Blechs (W) berechnet, das geschnitten wird, und

die Einheit (46) für Qualitätsermittlung so ausgeführt ist, dass sie auf Basis eines Vergleichsergebnisses beim Vergleichen des Standardabweichungs-Wertes mit dem in der Ermittlungsbedingung festgelegten ersten Schwellenwert ermittelt, ob der Brennfehler aufgetreten ist.

6.  Laser-Bearbeitungsmaschine (100) nach Anspruch 3 oder 4, wobei eine Ermittlungsbedingung, die die Überwachungs-Wellenlänge, den Berechnungszyklus sowie den ersten Schwellenwert und den zweiten Schwellenwert einschließt, für jede Materialbedingung einschließlich eines Materialtyps und einer Dicke eines Blechs (W) festgelegt wird,

die Einheit (44) für Berechnung eines Standardabweichungs-Wertes so ausgeführt ist, dass sie in dem in der Ermittlungsbedingung festgelegten Berechnungszyklus einen Standardabweichungs-Wert eines Wertes für Erfassung eines reflektierten Strahls bei der in der Ermittlungsbedingung festgelegten Überwachungs-Wellenlänge entsprechend der Materialbedingung des Blechs (W) berechnet, das geschnitten wird, und

die Einheit (46) für Qualitätsermittlung so ausgeführt ist, dass sie auf Basis eines Vergleichsergebnisses beim Vergleichen des Standardabweichungs-Wertes mit dem in der Ermittlungsbedingung festgelegten ersten Schwellenwert, ermittelt ob der Brennfehler aufgetreten ist, und so ausgeführt ist, dass sie auf Basis eines Vergleichsergebnisses beim Vergleichen des Standardabweichungs-Wertes mit dem in der Ermittlungsbedingung festgelegten zweiten Schwellenwert ermittelt, ob eine Gefahr von Auftreten des Brennfehlers vorliegt.

7.  Verfahren für Ermittlung eines Verarbeitungszustandes, das umfasst:

Bestrahlen eines Blechs (W) mit einem von einem Laseroszillator (10) emittierten Laserstrahl zum Schneiden des Blechs (W) durch einen Bearbeitungskopf (20);
Zuführen von Sauerstoff zu dem Bearbeitungskopf (20) als ein Hilfsgas durch eine Hilfsgas-Zuführvorrichtung (80), um das Hilfsgas auf das Blech (W) zu blasen; und
Erfassen eines reflektierten Strahls, der von dem Blech (W) reflektiert wird, wenn das Blech (W) mit dem Laserstrahl zum Schneiden des Blechs (W) bestrahlt wird, durch einen Detektor (30) für einen reflektierten Strahl;
**dadurch gekennzeichnet, dass** das Verfahren zum Ermitteln eines Verarbeitungszustandes des Weiteren umfasst:

Berechnen eines Standardabweichungs-Wertes eines Wertes für Erfassung eines reflektierten Strahls bei einer Überwachungs-Wellenlänge aus Werten für Erfassung eines reflektierten Strahls in einem vorgegebenen Wellenlängenband, die von dem Detektor für einen reflektierten Strahl (30) ausgegeben werden, in einem vorgegebenen Berechnungszyklus; und
Ermitteln, ob ein Brennfehler aufgetreten ist, bei dem eine Schnittfläche des Blechs (W) zu stark zum Schmelzen gebracht wird, auf Basis eines Vergleichsergebnisses beim Vergleichen des berechneten Standardabweichungs-Wertes mit einem ersten Schwellenwert.

8.  Verfahren für Ermittlung eines Verarbeitungszustandes nach Anspruch 7, das des Weiteren umfasst, dass dann ermittelt wird, dass der Brennfehler aufgetreten ist, wenn ein Zustand, in dem der Standardabweichungs-Wert genauso groß ist wie oder größer als der erste Schwellenwert, über eine vorgegebene Ermittlungszeit oder länger andauert.

9.  Verfahren für Ermittlung eines Verarbeitungszustandes nach Anspruch 7, das des Weiteren umfasst, dass auf Basis eines Vergleichsergebnisses beim Vergleichen des Standardabweichungs-Wertes mit einem zweiten Schwellenwert, der kleiner ist als der erste Schwellenwert, ermittelt wird, ob eine Gefahr von Auftreten des Brennfehlers vorliegt.

10. Verfahren für Ermittlung eines Verarbeitungszustandes nach Anspruch 9, das des Weiteren umfasst:

Ermitteln, dass eine Gefahr von Auftreten des Brennfehlers besteht, wenn ein Zustand, in dem der Standardabweichungs-Wert kleiner ist als der erste Schwellenwert und genauso groß ist wie oder größer als der zweite Schwellenwert, über eine vorgegebene Ermittlungszeit oder länger andauert; und
Ermitteln, dass der Brennfehler aufgetreten ist, wenn ein Zustand, in dem der Standardabweichungs-Wert genauso groß ist wie oder größer als der erste Schwellenwert, über die vorgegebene Ermittlungszeit oder länger andauert.

11. Verfahren für Ermittlung eines Verarbeitungszustandes nach Anspruch 7 oder 8, das des Weiteren umfasst:

Speichern einer Ermittlungsbedingung, die die Überwachungs-Wellenlänge, den Berechnungszyklus sowie den ersten Schwellenwert einschließt und für jede Materialbedingung einschließlich eines Materialtyps und einer Dicke eines Blechs (W) festgelegt wird, in einer Einheit für Speicherung einer Ermittlungsbedingung;

Lesen der dem Materialzustand des zu schneidenden Blechs (W) entsprechenden Ermittlungsbedingung aus der Einheit für Speicherung einer Ermittlungsbedingung;

Berechnen eines Standardabweichungs-Wertes eines Wertes für Erfassung eines reflektierten Strahls bei der in der gelesenen Ermittlungsbedingung festgelegten Überwachungs-Wellenlänge in dem in der gelesenen Ermittlungsbedingung festgelegten Berechnungszyklus;

Ermitteln, ob der Brennfehler aufgetreten ist, auf Basis eines Vergleichsergebnisses beim Vergleichen des Standardabweichungs-Wertes mit dem in der gelesenen Ermittlungsbedingung festgelegten ersten Schwellenwert.

12. Verfahren für Ermittlung eines Verarbeitungszustandes nach Anspruch 9 oder 10, das des Weiteren umfasst:

Speichern einer Ermittlungsbedingung, die die Überwachungs-Wellenlänge, den Berechnungszyklus, den ersten Schwellenwert sowie den zweiten Schwellenwert einschließt und für jede Materialbedingung einschließlich eines Materialtyps und einer Dicke eines Blechs (W) festgelegt wird, in einer Einheit für Speicherung einer Ermittlungsbedingung;

Lesen der dem Materialzustand des zu schneidenden Blechs (W) entsprechenden Ermittlungsbedingung aus der Einheit für Speicherung einer Ermittlungsbedingung;

Berechnen eines Standardabweichungs-Wertes eines Wertes für Erfassung eines reflektierten Strahls bei der in der gelesenen Ermittlungsbedingung festgelegten Überwachungs-Wellenlänge in dem in der gelesenen Ermittlungsbedingung festgelegten Berechnungszyklus; sowie

Ermitteln, ob der Brennfehler aufgetreten ist, auf Basis eines Vergleichsergebnisses beim Vergleichen des Standardabweichungs-Wertes mit dem in der gelesenen Ermittlungsbedingung festgelegten ersten Schwellenwert und Ermitteln, ob eine Gefahr von Auftreten des Brennfehlers vorliegt, auf Basis eines Vergleichsergebnisses beim Vergleichen des Standardabweichungs-Wertes mit dem in der gelesenen Ermittlungsbedingung festgelegten zweiten Schwellenwert.

**Revendications**

1. Machine de traitement laser (100), comprenant :

un oscillateur laser (10) configuré pour générer et émettre un faisceau laser ;
une tête de traitement (20) configurée pour irradier une tôle (W) avec le faisceau laser émis par l'oscillateur laser (10) pour découper la tôle (W) ;
un dispositif d'alimentation en gaz d'assistance (80) configuré pour fournir un gaz d'assistance à la tête de traitement (20) de manière à souffler le gaz d'assistance sur la tôle (W) ;
un dispositif NC (50) configuré pour commander l'oscillateur laser (10) ; et
un détecteur de faisceau réfléchi (30) configuré pour détecter un faisceau réfléchi par la tôle (W) lorsque la tôle (W) est irradiée par le faisceau laser pour découper la tôle (W) ;
**caractérisée en ce que** la machine de traitement laser (100) comprend en outre :

une unité de calcul de la valeur d'écart-type (44) configurée pour calculer, dans un cycle de calcul prédéterminé, une valeur d'écart-type d'une valeur de détection de faisceau réfléchi à une longueur d'onde de surveillance parmi les valeurs de détection de faisceau réfléchi dans une bande de longueur d'onde prédéterminée émise par le détecteur de faisceau réfléchi (30) ; et
une unité de détermination de la qualité (46) configurée pour déterminer s'il y a eu ou non un défaut de brûlure dans lequel une surface coupée de la tôle (W) est excessivement fondue, sur la base du résultat de comparaison, avec une première valeur seuil, de la valeur d'écart-type calculée par l'unité de calcul de la valeur d'écart-type (44).

2. Machine de traitement laser (100) selon la revendication 1, dans laquelle l'unité de détermination de la qualité (46) est configurée pour déterminer que le défaut de brûlure s'est produit dans le cas où un état se poursuit pendant une durée de détermination prédéterminée ou plus longtemps dans lequel la valeur d'écart-type est égale ou supérieure à la première valeur seuil.

3. Machine de traitement laser (100) selon la revendication 1, dans laquelle l'unité de détermination de la qualité (46) est configurée pour déterminer s'il existe ou non un risque d'apparition du défaut de brûlure sur la base d'un résultat de comparaison de la valeur d'écart-type avec une deuxième valeur seuil inférieure à la première valeur seuil.

**4.** Machine de traitement laser (100) selon la revendication 3, dans laquelle l'unité de détermination de la qualité (46) est configurée pour déterminer qu'il y a un risque d'apparition du défaut de brûlure dans le cas où un état se poursuit pendant une durée de détermination prédéterminée ou plus longtemps dans laquelle la valeur d'écart-type est inférieure à la première valeur seuil et égale ou supérieure à la deuxième valeur seuil, et est configurée pour déterminer que le défaut de brûlure s'est produit dans le cas où un état se poursuit pendant la durée de détermination prédéterminée ou plus longtemps dans laquelle la valeur d'écart-type est égale ou supérieure à la première valeur seuil.

**5.** Machine de traitement laser (100) selon la revendication 1 ou 2, dans laquelle une condition de détermination incluant la longueur d'onde de surveillance, le cycle de calcul et la première valeur seuil est définie pour chaque condition de matériau incluant un type de matériau et une épaisseur de tôle (W),

l'unité de calcul de la valeur d'écart-type (44) est configurée pour calculer, dans le cycle de calcul défini dans la condition de détermination, une valeur d'écart-type d'une valeur de détection d'un faisceau réfléchi à la longueur d'onde de surveillance définie dans la condition de détermination correspondant à l'état du matériau de la tôle (W) qui est découpée, et
l'unité de détermination de la qualité (46) est configurée pour déterminer si le défaut de brûlure s'est produit ou non sur la base d'un résultat de comparaison de la valeur d'écart-type avec la première valeur seuil fixée dans la condition de détermination.

**6.** Machine de traitement laser (100) selon la revendication 3 ou 4, dans laquelle une condition de détermination incluant la longueur d'onde de surveillance, le cycle de calcul, la première valeur seuil et la deuxième valeur seuil est définie pour chaque condition de matériau incluant un type de matériau et une épaisseur de tôle (W),

l'unité de calcul de la valeur d'écart-type (44) est configurée pour calculer, dans le cycle de calcul défini dans la condition de détermination, une valeur d'écart-type d'une valeur de détection d'un faisceau réfléchi à la longueur d'onde de surveillance définie dans la condition de détermination correspondant à l'état du matériau de la tôle (W) qui est découpée, et
l'unité de détermination de la qualité (46) est configurée pour déterminer si le défaut de brûlure s'est produit ou non sur la base d'un résultat de comparaison de la valeur d'écart-type avec la première valeur seuil fixée dans la condition de détermination, et est configurée pour déterminer s'il y a ou non un risque d'apparition du défaut de brûlure sur la base d'un résultat de comparaison de la valeur d'écart-type avec la deuxième valeur seuil fixée dans la condition de détermination.

**7.** Procédé de détermination de l'état de traitement, comprenant les étapes consistant à :

irradier, par une tête de traitement (20), une tôle (W) avec un faisceau laser émis par un oscillateur laser (10) pour couper la tôle (W) ;
fournir, par un dispositif d'alimentation en gaz d'assistance (80), de l'oxygène à la tête de traitement (20) en tant que gaz d'assistance de manière à souffler le gaz d'assistance sur la tôle (W) ; et
détecter, par un détecteur de faisceau réfléchi (30) un faisceau réfléchi par la tôle (W) lorsque la tôle (W) est irradiée par le faisceau laser pour découper la tôle (W) ;
**caractérisé en ce que** le procédé de détermination de l'état de traitement comprend en outre les étapes consistant à :

calculer, dans un cycle de calcul prédéterminé, une valeur d'écart-type d'une valeur de détection de faisceau réfléchi à une longueur d'onde de surveillance parmi les valeurs de détection de faisceau réfléchi dans une bande de longueur d'onde prédéterminée émise par le détecteur de faisceau réfléchi (30) ; et
déterminer s'il y a eu ou non un défaut de brûlure dans lequel une surface coupée de la tôle (W) est excessivement fondue sur la base d'un résultat de comparaison de la valeur d'écart-type calculée avec une première valeur seuil.

**8.** Procédé de détermination de l'état de traitement selon la revendication 7, comprenant en outre la détermination que le défaut de brûlure s'est produit dans un cas où un état se poursuit pendant une durée de détermination prédéterminée ou plus longtemps dans lequel la valeur d'écart-type est égale ou supérieure à la première valeur seuil.

**9.** Procédé de détermination de l'état de traitement selon la revendication 7, comprenant en outre la détermination de l'existence ou non d'un risque d'apparition du défaut de brûlure sur la base d'un résultat de comparaison de la valeur d'écart-type avec une deuxième valeur seuil inférieure à la première valeur seuil.

**10.** Procédé de détermination de l'état de traitement selon la revendication 9, comprenant en outre les étapes consistant à :

déterminer qu'il existe un risque d'apparition du défaut de brûlure dans le cas où un état se poursuit pendant une durée de détermination prédéterminée ou plus longtemps dans lequel la valeur d'écart-type est inférieure à la première valeur seuil et égale ou supérieure à la deuxième valeur seuil ; et
déterminer que le défaut de brûlure s'est produit dans un cas où un état se poursuit pendant la durée de détermination prédéterminée ou plus longtemps dans lequel la valeur d'écart-type est égale ou supérieure à la première valeur seuil.

**11.** Procédé de détermination de l'état de traitement selon la revendication 7 ou 8, comprenant en outre les étapes consistant à :

stocker, dans une unité de stockage des conditions de détermination, une condition de détermination incluant la longueur d'onde de surveillance, le cycle de calcul et la première valeur seuil fixée pour chaque condition de matériau incluant un type de matériau et une épaisseur de tôle (W) ;
lire, à partir de l'unité de stockage des conditions de détermination, la condition de détermination correspondant à l'état du matériau de la tôle (W) à découper ;
calculer, dans le cycle de calcul défini dans la condition de détermination de la lecture, une valeur d'écart-type d'une valeur de détection d'un faisceau réfléchi à la longueur d'onde de surveillance définie dans la condition de détermination de la lecture ; et
déterminer si le défaut de brûlure s'est produit ou non sur la base du résultat de comparaison de la valeur d'écart-type avec la première valeur seuil fixée dans la condition de détermination de la lecture.

**12.** Procédé de détermination de l'état de traitement selon la revendication 9 ou 10, comprenant en outre les étapes consistant à :

stocker, dans une unité de stockage des conditions de détermination, une condition de détermination incluant la longueur d'onde de surveillance, le cycle de calcul, la première valeur seuil et la deuxième valeur seuil fixée pour chaque condition de matériau incluant un type de matériau et une épaisseur de tôle (W) ;
lire, à partir de l'unité de stockage des conditions de détermination, la condition de détermination correspondant à l'état du matériau de la tôle (W) à découper ;

calculer, dans le cycle de calcul défini dans la condition de détermination de la lecture, une valeur d'écart-type d'une valeur de détection d'un faisceau réfléchi à la longueur d'onde de surveillance définie dans la condition de détermination de la lecture ; et
déterminer si le défaut de brûlure s'est produit ou non sur la base du résultat de comparaison de la valeur d'écart-type avec la première valeur seuil fixée dans la condition de détermination de la lecture, et déterminer s'il y a ou non un risque d'apparition du défaut de brûlure sur la base du résultat de comparaison de la valeur d'écart-type avec la deuxième valeur seuil fixée dans la condition de détermination de la lecture.

**Fig. 1**

EP 4 032 654 B1

# Fig. 2

EP 4 032 654 B1

EP 4 032 654 B1

# Fig. 3

MATERIAL CONDITION
SS400, 16 mm THICK

DETERMINATION CONDITION
MONITORING WAVELENGTH: 800 nm
CALCULATION CYCLE: 0.5 sec.

THO        230
TH1        250
DETERMINATION TIME: 1 sec.

MATERIAL CONDITION
SS400, 22 mm THICK

DETERMINATION CONDITION
MONITORING WAVELENGTH: 800 nm
CALCULATION CYCLE: 0.5 sec.

THO        400
TH1        450
DETERMINATION TIME: 1 sec.

· · · · · ·

MATERIAL CONDITION
COPPER PLATE, ** mm THICK

DETERMINATION CONDITION
MONITORING WAVELENGTH: *** nm
CALCULATION CYCLE:   * sec.

THO        ***
TH1        ***
DETERMINATION TIME: * sec.

MATERIAL CONDITION
COPPER PLATE, ** mm THICK

DETERMINATION CONDITION
MONITORING WAVELENGTH: *** nm
CALCULATION CYCLE:   * sec.

THO        ***
TH1        ***
DETERMINATION TIME: * sec.

· · · · · ·

16

# Fig. 4A

DETECTION
LEVEL

V30

320

WAVELENGTH (nm)

TIME

800    900

# Fig. 4B

DETECTION
LEVEL

V30

320

WAVELENGTH (nm)

TIME

800    900

# Fig. 5A

EP 4 032 654 B1

# Fig. 5B

EP 4 032 654 B1

# Fig. 6A

# Fig. 6B

EP 4 032 654 B1

**EP 4 032 654 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016155140 A

- US 5698120 A